# EUROPÄISCHE PATENTSCHRIFT

(11) **EP 2 087 959 B1**
(45) Veröffentlichungstag und Bekanntmachung des Hinweises auf die Patenterteilung: **20.01.2016**
(21) Anmeldenummer: 09151047.9
(22) Anmeldetag: 21.01.2009
(51) Int. Cl.: B23C 3/08

(54) **Verfahren zur Fräsbearbeitung räumlicher Kurven**
Method of milling spatial curves
Procédé de fraisage de courbes spatiales

(30) Priorität: 09.02.2008 DE 102008008382
(43) Veröffentlichungstag der Anmeldung: 12.08.2009
(73) Patentinhaber: Gebr. Heller Maschinenfabrik GmbH, 72622 Nürtingen (DE)
(72) Erfinder: Hummel, Erhard, 73278, Schlierbach (DE)
(74) Vertreter: Rüger, Barthelt & Abel

(56) Entgegenhaltungen:
- EP-A- 1 500 453
- CH-A5- 641 392
- DE-A1- 10 036 459
- DE-A1- 19 607 192
- DE-A1-102004 006 164

## Beschreibung

Die Erfindung betrifft ein Verfahren zur Erzeugung räumlicher Führungsbahnen an Führungskörpern, die zur Bewegung eines Kurvenfolgers dienen, wobei die Bewegung durch eine Relativbewegung des Führungskörpers, z.B. durch eine Drehung desselben hervorgerufen wird.

In der Metallbearbeitung ist das Fräsen zur Erzeugung räumlicher Oberflächen weit verbreitet. Z.B. zeigt die DE 10 2004 006 164 A1 ein Verfahren zum Fräsen einer Nut auf einem Zylindermantel. Zum Fräsen der Nut wird ein Fräser eingesetzt, dessen Durchmesser geringer ist als die Nutweite. Die Mittellinie der Nut wird als Mittelpunktsbahn bezeichnet. Sie weist mindestens einen Abschnitt auf, der schräg zu einer Querschnittsebene des zylindrischen Körpers steht. Der Fräser wird entlang der Mittelpunktsbahn geführt, wobei seine Mittelachse mit Korrekturvektoren gegen die Mittelpunktsbahn versetzt sein kann. Die Richtung der Korrekturvektoren steht dabei senkrecht auf der Fräsrichtung eines hypothetischen Fräsers mit voller Nutbreite in einer Nuttiefe ungleich Null.

Die Fräsbearbeitung räumlicher Flächen ist auch für die Bearbeitung von Strömungsleittlächen bekannt. Dazu offenbart die DE 100 31 441 A1 ein Verfahren zum Steuern der Arbeitsbewegung eines Fräswerkzeugs bei der Herstellung von Turbinenschaufeln. Dabei wird ein Materialblock, aus dem die Turbinenschaufel herzustellen ist, zunächst einer Schruppbearbeitung und dann einer Schlichtbearbeitung unterzogen, um die räumlich gewölbten Strömungsflächen zu erzeugen. Bei der Schruppbearbeitung wird der Materialblock bis auf ein vorgegebenes Aufmaß, d.h. einen über die vorgegebene Werkstückform bestehenden Materialüberstand, abgetragen. Die Schruppbearbeitung nutzt eine spiralartig umlaufende Bewegung um die Längsachse des Schaufelprofils, bei der von außen nach innen materialabtragend in einem spiralartigen Umlauf eine Annäherung an die endgültige Werkstückform erfolgt. Die Schlichtbearbeitung erzeugt die endgültige Mantelfläche der vorgegebenen Werkstückform. Hierbei wird das Fräswerkzeug längs der vorgegebenen Mantelfläche mit Vorschubrichtung längs der Achse helixförmig an der vorgegebenen Mantelfläche entlang geführt. Die Fräsbearbeitung erfolgt mit geneigtem Fräswerkzeug, d.h. die Drehachse des Fräsers schließt mit der normalen Richtung der Werkstückoberfläche einen spitzen Winkel ein.

Während die Bearbeitung von Strömungsprofilen einen Führung des Fräsers lediglich mit Rücksicht auf die Erzeugung einer Fläche, nämlich der Strömungsfläche, erfordert, muss beim Fräsen von Nuten auf die Maßhaltigkeit dreier verschiedener Flächen, nämlich einer Bodenfläche und zweier Nutflanken geachtet werden. Außerdem ist der Materialabtrag beim Öffnen von Nuten in der Regel überaus groß. Sollen nun beispielsweise an Führungskörpern räumliche Führungsbahnen erzeugt werden, die der Bewegung eines Kurvenfolgers durch Relativbewegung von Kurvenfolger und Führungskörper dienen, ergeben sich meist sehr lange Bearbeitungszeiten. Die präzise Feinbearbeitung der Kurvenbahnen erfordert die Zerspanung mit Werkzeugen, die zwar eine hohe Bearbeitungsgenauigkeit, dabei aber eine relativ geringe Zerspanungsleistung erbringen, wie beispielsweise HSS-Fräsern. Der Einsatz dieser HSS-Fräser ist insbesondere auch deshalb erforderlich, weil die betreffenden Werkzeuge sowohl an ihren Umfangsschneiden zur Bearbeitung der Nutflanken und zum Öffnen der Nut wie auch an ihren Stirnschneiden zur Bearbeitung des Nutbodens Zerspanungsleistung erbringen.

Davon ausgehend ist es Aufgabe der Erfindung, ein Verfahren anzugeben, mit dem sich räumliche Führungsbahnen an Führungskörpern mit geringer Bearbeitungszeit erzeugen lassen.

Diese Aufgabe wird mit dem Verfahren nach Anspruch 1 gelöst:
Das erfindungsgemäße Verfahren teilt die Bearbeitung der Führungsbahn in einen Schruppbearbeitungsvorgang und in einen Schlichtbearbeitungsvorgang auf. Der Schruppbearbeitungsvorgang wird dabei unter einem als Sturzwinkel bezeichneten Neigungswinkel ausgeführt, der nicht mit dem Winkel übereinstimmt, unter dem die Schlichtbearbeitung ausgeführt wird. Sowohl der Schruppfräser als auch der Schlichtfräser fahren bei der Durchführung der Fräsbearbeitung die Führungsbahn des Führungskörpers ab, wobei der Schruppfräser die Bearbeitung mit einem Aufmaß ausführt. Jedoch arbeiten beide Fräser wie erwähnt unter unterschiedlichen Sturzwinkeln. Unter Sturzwinkel ist dabei die räumliche Orientierung der Drehachse des Fräswerkzeugs insbesondere bezüglich einer Radialrichtung des Führungskörpers zu verstehen, an dem die Führungsbahn erzeugt werden soll.

Durch die unterschiedlichen Sturzwinkel der Fräswerkzeuge beim Schruppfräsen und beim Schlichtfräsen laufen der Schruppfräser und der Schlichtfräser bezogen auf das Werkstück auf unterschiedlichen Bahnen, die sich nicht nur durch einen aufmaßbedingten Parallelversatz unterscheiden. Es wird erreicht, dass der Schruppfräser Materialzerspanung vorwiegend oder ausschließlich mit seinen Umfangsschneiden sowie gegebenenfalls mit seinen Eckschneiden leistet. Der Sturzwinkel ist dabei so orientiert, dass die Drehachse des Fräsers vorzugsweise nicht rechtwinklig zu dem Boden der zu öffnenden Nut steht. Hingegen ist der Sturzwinkel des Schlichtfräsers anders bemessen. Vorzugsweise ist er geringer als der Sturzwinkel des Schruppfräsers. In der am meisten bevorzugten Ausführungsform ist der Sturzwinkel des Schruppfräsers weitgehend konstant. Hingegen ist der Sturzwinkel des Schlichtfräsers bei der bevorzugten Ausführungsform so bemessen, dass er mit dem Sturzwinkel des Kurvenfolgerelements einer fertigen Kurvenbahn übereinstimmt. Wird das Kurvenfolgerelement im späteren Einsatz auf einer zu der Achse des Führungskörpers parallelen Bahn geführt, ist der Sturzwinkel des Schlichtfräsers konstant und unverändert. Wird das Kurvenfolgerelement hingegen auf einer räumlichen, beispielsweise bogenförmigen Bahn geführt, wird der Schlichtfräser vorzugsweise auf der gleichen Bahn geführt, wobei seine Drehachse auf dieser Bahn mit der Drehachse des Kurvenfolgerelements übereinstimmt.

Vorzugsweise wird die Drehachse des Schruppfräsers in Längsrichtung der zu öffnenden Nut geneigt. Die Längsrichtung kann als Tangente an die Mittellinie der Nut begriffen werden. Dies gilt sowohl für Nuten mit konstantem Steigungswinkel wie auch für Nuten mit wechselndem Steigungswinkel. Insbesondere hat das Verfahren Bedeutung zur Herstellung von Führungsbahnen für Kurvenfolger, die auf nicht linearen Bahnen bewegt werden, wie beispielsweise auf bogenförmigen Bahnen. In diesem Fall können die Nutflanken besonders komplizierte Formen aufweisen und insbesondere Abschnitte haben, die nicht parallel zur Radialrichtung verlaufen. Der Sturzwinkel des Schruppfräsers wird dabei in jedem Fall so eingestellt, dass das zur Schlichtbearbeitung erforderliche Aufmaß an den Nutflanken vorhanden bleibt. Der Nutboden muss hingegen nicht zwangsläufig einer Schlichtbearbeitung zugeführt werden. Hier kann festgelegt werden, dass der Nutboden schon mit der Schruppbearbeitung auf Maß oder etwas tiefer bearbeitet wird.

Weitere Einzelheiten vorteilhafter Ausführungsformen der Erfindung ergeben sich aus Ansprüchen, der Zeichnung oder der Beschreibung. Die Beschreibung beschränkt sich auf sich dabei auf wesentliche Aspekte der Erfindung und sonstige Gegebenheiten. Die Zeichnung offenbart weitere Einzelheiten und ist ergänzend heranzuziehen. Es zeigen:
Figur 1 einen Schruppfräser beim Öffnen einer Nut in schematischer Darstellung,
Figur 2 die geometrischen Verhältnisse des Fräsers und des Werkstücks in einer Querschnittsdarstellung des Werkstücks in Draufsicht,
Figur 3 die geometrischen Verhältnisse bei der Bearbeitung der Nut in einer perspektivischen schematischen Darstellung,
Figur 4 die geometrischen Verhältnisse bei der Schlichtbearbeitung in einer Querschnittsansicht des Führungskörpers,
Figur 5 Konturen der Schruppbearbeitung und der Feinbearbeitung an dem Werkstück im Längsschnitt in schematisierter Darstellung,
Figur 6 einen Führungskörper mit Führungsbahn und Kurvenfolger in schematisierter seitlicher Ansicht und
Figur 7 geometrische Verhältnisse beim Schruppfräsen einer Führungsbahn für eine gekrümmte Bahn eines Nutfolgers in schematisierter Darstellung.

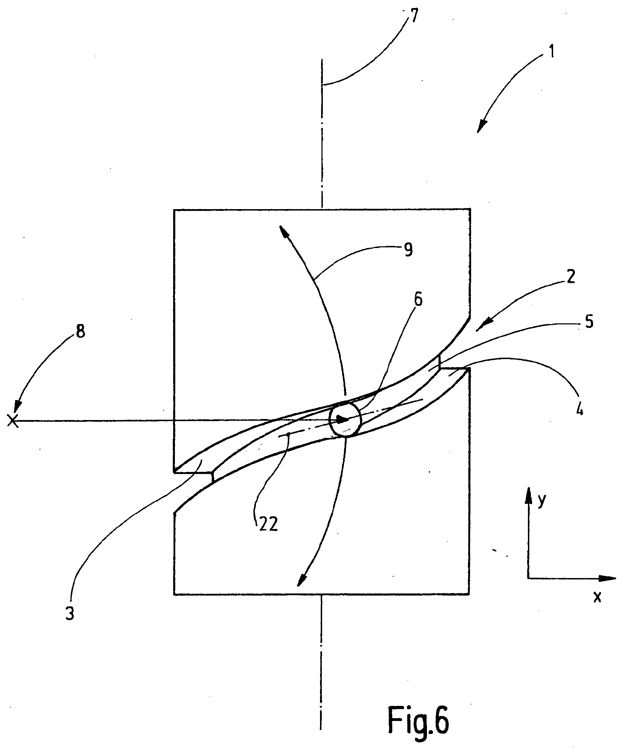

In Figur 6 ist ein Führungskörper 1 veranschaulicht, an dem eine Führungsbahn 2 ausgebildet ist. Diese wird durch eine Nut gebildet, die zwei Nutflanken 3, 4 und einen Nutboden 5 aufweist. Zwischen den Nutflanken 3, 4 ist ein Kurvenfolger 6 gehalten, der bei Drehung des z.B. rotationssymmetrischen Führungskörpers 1 um seine Achse 7 in Folge der Steigung der Führungsbahn 2 eine Axialbewegung erfährt. Der Kurvenfolger 6 ist beispielsweise um ein Drehzentrum 8 schwenkbar gelagert, so dass er zwangsläufig eine bogenförmige Bahn 9 durchläuft. Dieser hat sowohl eine Bewegungskomponente in Richtung der Achse 7 (Y-Richtung in Figur 6) wie auch quer dazu (X-Richtung in Figur 6).

Das Herstellen der die Führungsbahn 2 bildenden Nut erfolgt in zumindest zwei Arbeitsschritten. Diese sind ein ein- oder mehrschrittiger Schruppfräsbearbeitungsvorgang und ein ein- oder mehrschrittiger Schlichtfräsvorgang.

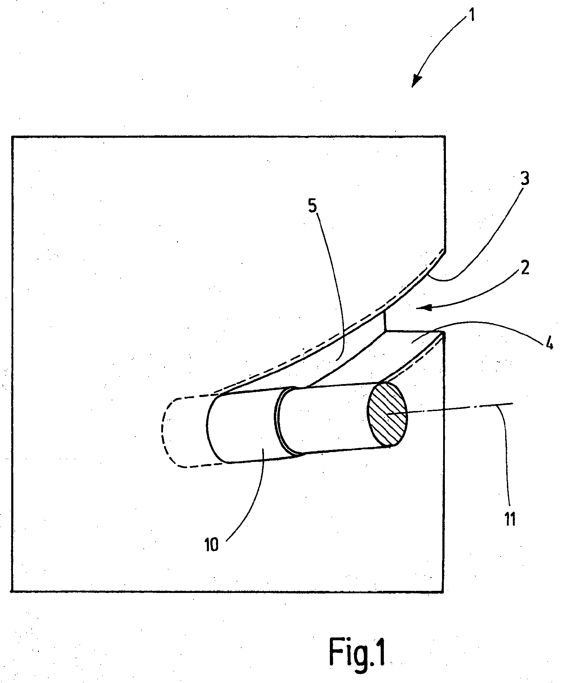

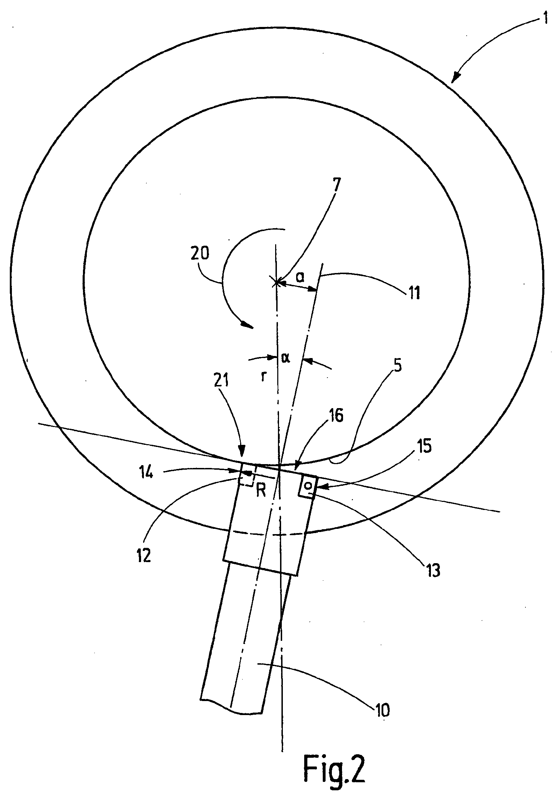

Sowohl die Schruppfräsbearbeitung wie auch die Schlichtfräsbearbeitung werden jeweils mit Fingerfräsern durchgeführt. Figur 1 und 2 veranschaulichen einen Schruppfräser 10, der um eine Drehachse 11 drehend angetrieben ist und einen mit Wendeschneidplatten 12, 13 besetzten Fräserkörper aufweist. Die Wendeschneidplatten 12, 13 weisen über den Fräserumfang vorstehende Umfangsschneidkanten 14, 15 auf, die die Hauptzerspanungsleistung erbringen. An der Fräserstirn 16 können Schneidkanten vorhanden sein, die aber keine wesentliche Zerspanungsleistung erbringen. Zwischen den Stirnschneidkanten und den Umfangsschneidkanten 14, 15 sind Eckschneidkanten ausgebildet, die auch Zerspanungsleistung erbringen können.

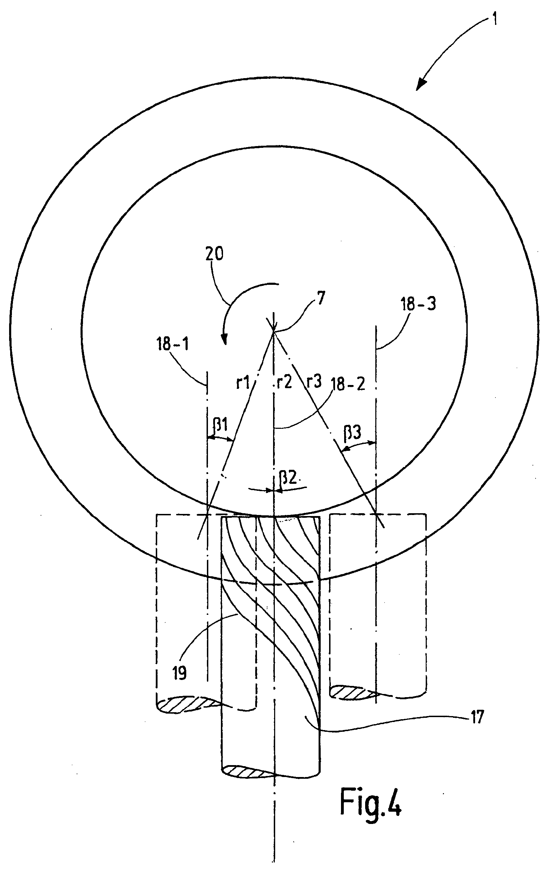

Zur Schlichtbearbeitung dient ein aus Figur 4 ersichtlicher Schlichtfräser 17, der wiederum um eine Drehachse 18 drehend angetrieben ist. Der Schlichtfräser 17 weist Schneidkanten 19 sowohl an seinem Umfang wie auch an seiner Stirn auf. Beispielsweise ist der Schlichtfräser 17 ein HSS-Fräser mit geschliffenen Schneidkanten, ein mit geschliffenen Schneidplatten versehener Fräser oder ein Vollhartmetallfräser.

Zur Erzeugung der Führungsbahn 2 wird wie folgt vorgegangen:
Zunächst wird der Führungskörper 1 auf einer Werkstückaufnahme positioniert, die eine Drehung des Führungskörpers 1 um die Achse 7 gestattet. Der Schruppfräser 10 wird an einer Arbeitsspindel arretiert und dreht um die Drehachse 11. Zur Erzeugung der Führungsbahn 2 wird er durch eine seitliche quer zu der Drehachse 11 gerichtete Zustellbewegung in Eingriff mit dem Führungskörper 1 gebracht bis die Position nach Figur 2 erreicht ist. Die Drehachse 11 des Schruppfräsers 10 schneidet die Achse 7 des Führungskörpers 1 nicht. Vorzugsweise stimmt der Abstand a zwischen der Drehachse 11 und der Achse 7 mit dem Radius R des Schruppfräsers 10 überein. Der Abstand a kann aber auch etwas kleiner oder auch größer als der Radius R sein. Die Radialrichtung r, die in Figur 2 als Verbindungslinie zwischen der Achse 7 und dem Durchtrittspunkt der Drehachse 11 durch die Fräserstirn 6 beschrieben ist, schließt mit der Drehachse 11 einen Winkel α ein, der auch als Sturzwinkel bezeichnet wird. Die Drehachse 11 schließt mit dem Nutboden 5 einen Winkel von 90°-α ein.

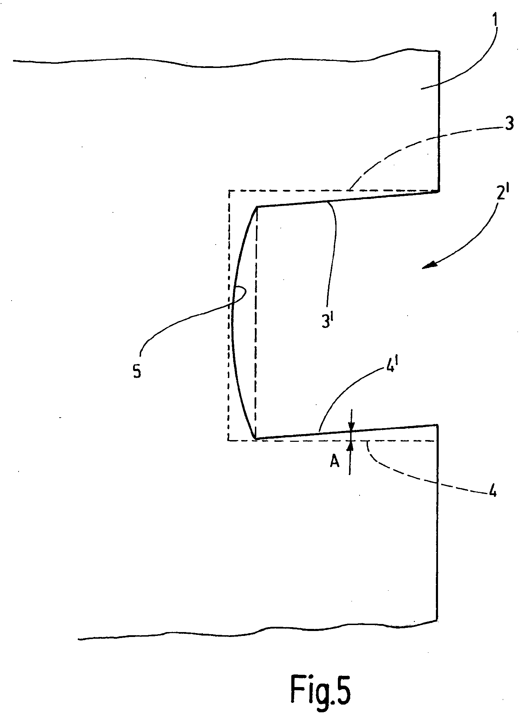

Zum Öffnen der Nut wird der Führungskörper 1 in Richtung des Pfeils 20 gedreht. An der Stelle 21 tritt die Hauptzerspanungsleistung auf. Die Zerspanung erfolgt hauptsächlich an den Umfangsschneiden 14, 15, nicht jedoch an der Fräserstirn 16. Es wird die in Figur 5 in dicken Linien dargestellte Nut 2' geöffnet, deren Boden 5 in Folge der Schrägstellung des Schruppfräsers 10 mit dem Sturzwinkel α nicht ganz eben sondern leicht gewölbt ist. Der Sturzwinkel α ist vorzugsweise im Wesentlichen konstant. Bezogen auf das in Figur 5 gestrichelt dargestellte Sollmaß, mit dem die Nutflanken 3, 4 erzeugt werden sollen, wird die Nut 2' zunächst mit einem Aufmaß geöffnet. Die Relativbewegung zwischen dem Schruppfräser 10 (und/oder dem Schlichtfräser 17) und dem Führungskörper 1 kann alternativ bei ruhendem Führungskörper 1 durch räumliche Bewegung des Fräsers 10, 17 oder durch Überlagerung von Bewegungen des Führungskörpers 1 und dem Fräser 10, 17 erzeugt werden.

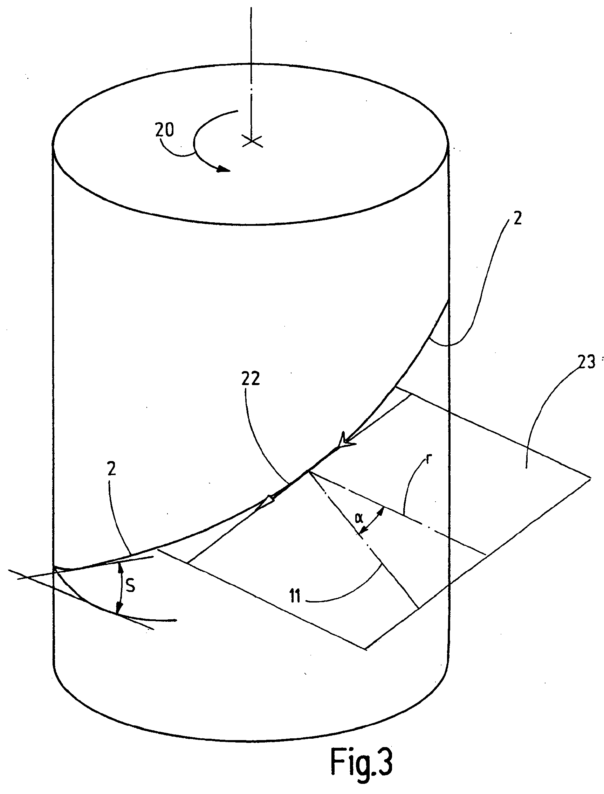

Die genaueren geometrischen Verhältnisse gehen aus Figur 3 hervor. Wenn die Nut 2 unter einem konstanten oder auch variierenden Steigungswinkel S angeordnet ist (die Nut 2 ist in Figur 3 lediglich anhand ihrer Mittellinie veranschaulicht), kann jeder Punkt der Nut 2 durch einen Steigungsvektor 22 symbolisiert werden. Dieser gibt die Richtung der Steigung oder des Gefälles der Nut 2 an. Zusammen mit der Radialrichtung r legt der Steigungsvektor 22 eine gedachte Ebene 23 fest, die als Steigungsebene bezeichnet werden kann. Die Drehachse 11 des Schruppfräsers 10 liegt vorzugsweise innerhalb der Steigungsebene 23. Folglich ist der Sturzwinkel α, der in Figur 2 in seiner räumlichen Projektion auf die Querschnittsebene veranschaulicht ist, vorzugsweise in der Steigungsebene 23 zu messen. Die Neigung der Drehachse 11 ist somit in oder gegen den Steigungsvektor 22 festgelegt. Das sich ergebende Fräsbild zeigt sich in Figur 5. Die Flanken 3', 4', die der Schruppfräser 10 hinterlässt, sind nicht zwangsläufig parallel zu den gewünschten Nutflanken 3, 4. Das vorhandene Aufmaß A ist so groß, dass an keiner Stelle die gestrichelt dargestellte Sollkontur in Form der Nutflanken 3, 4 überschritten wird. Jedoch kann der Nutboden 5 bedarfsweise unterhalb der Sollkontur liegen, wenn dies für erforderlich gehalten wird.

Figur 5 veranschaulicht zwei Varianten. Eine gestrichelt dargestellte Variante geht von einem Nutboden aus, der von dem real erzeugten Nutboden 5 unterschritten wird. Die in Figur 5 gepunktet dargestellte Variante geht hingegen von einer Sollkontur aus, die von dem real erzeugten Nutboden 5 im Schruppfräsbearbeitungsvorgang nicht erreicht wird, so dass ein Aufmaß verbleibt. Beide Varianten sind möglich.

Nach Beendigung des Schruppfräsbearbeitungsvorgangs wird das Schlichtfräsen durchgeführt. Dazu dient der Schlichtfräser 17, dessen Drehachse 18 unter einem konstanten oder variierenden Sturzwinkel β zu der Radialen orientiert ist. Der Sturzwinkel β stimmt vorzugsweise mit dem Sturzwinkel des Kurvenfolgers 6 überein. Ist der Kurvenfolger 6 konzentrisch zu der Radialen r, dann ist die Drehachse 18 vorzugsweise auch radial zu der Achse 7 orientiert (siehe Figur 4). In diesem Fall ist der Sturzwinkel β gleich Null. Die Drehbewegung des Führungskörpers 1 um die Achse 7 kann zu einer bohrenden Zerspanung an der Fräserstirn führen, sofern der Schlichtfräser überhaupt zum Bearbeiten des Nutbodens 5 eingesetzt wird. Jedenfalls aber bearbeitet er die Nutflanken 3, 4 auf Maß.

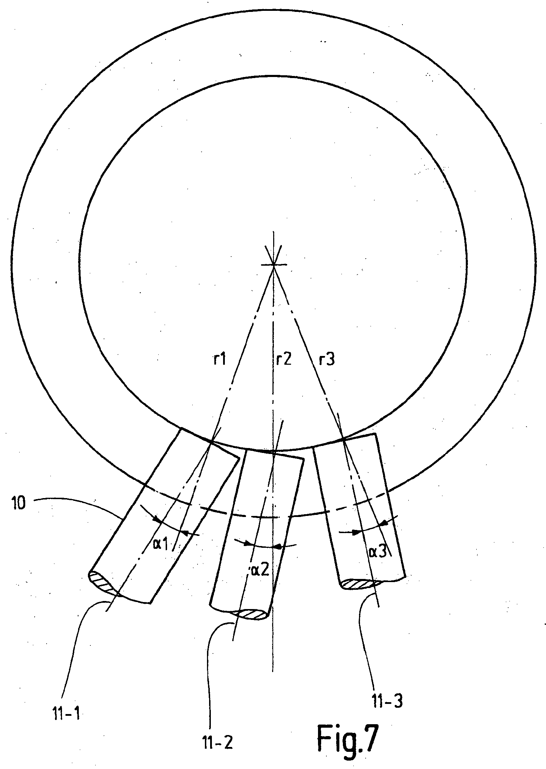

Zur Erläuterung des Zusammenhangs zwischen dem Schlichtfräsbearbeitungsvorgang und dem Schruppfräsbearbeitungsvorgang wurde bei der vorstehenden Beschreibung stillschweigend davon ausgegangen, dass sich der Kurvenfolger 6, der zu erzeugenden Führungsbahn im Wesentlichen axial bewegt. Soll er jedoch die in Figur 6 veranschaulichte Bewegung entlang der bogenförmigen Bahn 9 ausführen, kommt es zu einer weiteren Verformung der dazu erforderlichen Führungsbahnen 3, 4. Auch diese werden wiederum mit unterschiedlichen Sturzwinkeln α, β beim Schruppfräsen und beim Schlichtfräsen durchgeführt. Es wird auf Figur 4 und 7 Bezug genommen. Figur 7 veranschaulicht die Position des Schruppfräsers 10 an drei verschiedenen Stellen der Bahn 9 in Figur 6 zur Radialen r1, r2, r3 hat der Schruppfräser 10 jeweils einen Sturzwinkel α1, α2, α3. Dieser Sturzwinkel α1, α2, α3 ist vorzugsweise im Wesentlichen konstant, wobei es auf Abweichungen im Gradbereich bei ausreichendem Aufmaß nicht ankommt. Figur 4 veranschaulicht hingegen die Positionen des Schlichtfräsers 17 in entsprechenden drei Positionen. Die Drehachsen 18-1, 18-2, 18-3 des Schlichtfräsers 17 schließen mit den jeweiligen Radialen r1, r2, r3 unterschiedliche Sturzwinkel β1, β2, β3 ein. Die Sturzwinkel β1, β2, β3 können positiv, negativ oder Null sein. Vorzugsweise sind die Drehachsen 18-1, 18-2, 18-3 in den verschiedenen Positionen parallel zueinander. Demgegenüber schließen die Drehachsen 11-1, 11-2, 11-3 des Schruppfräsers 10 in Figur 7 in den unterschiedlichen Positionen miteinander jeweils einen spitzen Winkel ein.

Bei einer bevorzugten Ausführungsform folgt der Schlichtfräser 17 der Bahn des Nockenfolgers 6 mit vorzugsweise gleicher räumlicher Orientierung. Hingegen durchläuft der Schruppfräser die Bahn des Nockenfolgers mit wechselnder räumlicher Orientierung. Während der Schruppfräser zerspanungsoptimiert arbeitet, arbeitet der Schlichtfräser präzisionsoptimiert. Dies ist unabhängig davon, ob der Schruppfräser 10 und/oder der Schlichtfräser 17 auf die Breite der jeweils zu bearbeitenden Nut genau abgestimmt oder schmaler als diese ausgebildet ist, um sie mehrmals zu durchlaufen.

Zur rationellen Bearbeitung räumlicher Führungsbahnen 2 von Führungskörpern 1 dient ein zweistufiges Fräsverfahren, bei dem ein Schruppfräser 10 und ein Schlichtfräser 17 mit unterschiedlichen Sturzwinkeln entlang der zu öffnenden Nut 2 geführt werden.

### Bezugszeichen

- 1: Führungskörper
- 2, 2': Führungsbahn
- 3, 4: Nutflanken
- 3', 4': Flanken
- 5: Nutboden
- 6: Nutfolger
- 7: Achse
- 8: Drehzentrum
- 9: Bahn
- 10: Schruppfräser
- 11: Drehachse
- 12, 13: Wendeschneidplatten
- 14, 15: Umfangsschneidkanten
- 16: Fräserstirn
- 17: Schlichtfräser
- 18: Drehachse
- 19: Schneidkanten
- 20: Pfeil
- 21: Stelle
- 22: Steigungsvektor
- 23: Ebene
- 18-1 ... 18-3; 11-1 ... 11-3: Achsenpositionen
- S: Steigung
- α, α1, α2, α3, β: Sturzwinkel
- r1, r2, r3, r: Radiale

## Patentansprüche

1. Verfahren zur Erzeugung räumlicher Führungsbahnen (2) an Führungskörpern (1) zur Bewegung eines Kurvenfolgers (6) infolge einer Relativbewegung des Führungskörpers (1):
mit einer Schruppfräsbearbeitung, bei der mittels eines Schruppfräsers (10) eine Nut in den Führungskörper (1) eingebracht wird, indem der Führungskörper (1) und der Schruppfräser (10) bei der zur Materialzerspanung auszuführenden Vorschubbewegung eine Relativbewegung (20) zueinander ausführen, bei der der Schruppfräser (10) die Bewegung des Kurvenfolgers (6) an der fertigen Führungsbahn (2) mit einem gegebenen Sturzwinkel (α) ausführt, und
mit einer Feinbearbeitung, bei der die Nut mittels eines Schlichtfräsers (17) bearbeitet wird, indem der Führungskörper (1) und der Schlichtfräser (17) bei der zur Materialzerspanung auszuführenden Vorschubbewegung eine Relativbewegung (20) zueinander ausführen, die zu der Bewegung des Kurvenfolgers (6) an der fertigen Führungsbahn (2) einen anderen Sturzwinkel (β) aufweist.

2. Verfahren nach Anspruch 1, **dadurch gekennzeichnet, dass** der Sturzwinkel (β) des Schlichtfräsers (17) entlang der Führungsbahn (2) variiert.

3. Verfahren nach Anspruch 1, **dadurch gekennzeichnet, dass** der Sturzwinkel (α) des Schruppfräsers (10) entlang der Führungsbahn (2) im Wesentlichen konstant gehalten wird.

4. Verfahren nach Anspruch 1, **dadurch gekennzeichnet, dass** die Materialzerspanung bei der Schruppfräsbearbeitung ausschließlich von Umfangs- und Eckschneiden (14, 15) des Schruppfräsers (10) geleistet wird.

5. Verfahren nach Anspruch 1, **dadurch gekennzeichnet, dass** der Schruppfräser (10) bei der Schruppfräsbearbeitung um eine Drehachse (11) dreht, die in einem spitzen Winkel zu dem Boden der durch die Schruppfräsbearbeitung geöffneten Nut (2) steht.

6. Verfahren nach Anspruch 1, **dadurch gekennzeichnet, dass** der Schruppfräser (10) bei der Schruppfräsbearbeitung um eine Drehachse (11) dreht, die in einem spitzen Winkel zu einer Radialrichtung steht, die einerseits die Achse (7) des Führungskörpers (1) und andererseits die Mitte der Stirn (16) des Fräsers (10) durchläuft.

7. Verfahren nach Anspruch 1, **dadurch gekennzeichnet, dass** der Schruppfräser (10) bei der Schruppfräsbearbeitung um eine Drehachse (11) dreht, die in einem spitzen Winkel zu einer Querschnittsfläche des Führungskörpers (1) steht.

8. Verfahren nach Anspruch 1, **dadurch gekennzeichnet, dass** der Schruppfräser (10) bei der Schruppfräsbearbeitung um eine Drehachse (11) dreht, die in einer Ebene (23) liegt, die durch die Radiale des Führungskörpers (1) und einen Tangentenvektor (22) festgelegt ist, der in Richtung der zu öffnenden Nut (2) weist.

9. Verfahren nach Anspruch 1, **dadurch gekennzeichnet, dass** der Abstand (A) des Schruppfräsers (10) von der Nutflanke (3, 4) die Summe aus einer Maßzugabe für den Schlichtfräsvorgang und einer Maßzugabe für die Abweichung der Schruppfräserbahn von der Schlichtfräserbahn ist.

10. Verfahren nach Anspruch 1, **dadurch gekennzeichnet, dass** die Drehachse (11) des Schruppfräsers (10) während der Fräsbearbeitung einen räumlichen Sturzwinkel (α) aufweist.

11. Verfahren nach Anspruch 1, **dadurch gekennzeichnet, dass** sich die Feinbearbeitung auf die Nutflanken (3, 4) beschränkt.

12. Verfahren nach Anspruch 1, **dadurch gekennzeichnet, dass** der Schruppfräser (10) bei der Schruppbearbeitung die Nutflanken (3, 4) mit Aufmaß (A) und den Nutboden mit Untermaß bearbeitet.

## Claims

1. Method for producing spatial guide tracks (2) on guide bodies (1) in order to move a cam follower (6) as a result of a relative movement of the guide body (1):
comprising a rough milling, during which a groove is formed in the guide body (1) by means of a rough milling cutter (10) in that the guide body (1) and the rough milling cutter (10), during the advancing movement to be carried out for material removal purposes, carry out a relative movement (20) with respect to one another, during which the rough milling cutter (10) carries out the movement of the cam follower (6) on the finished guide track (2) with a given camber angle (α), and
comprising a fine machining, during which the groove is machined by means of a finish milling cutter (17) in that the guide body (1) and the finish milling cutter (17), during the advancing movement to be carried out for material removal purposes, carry out a relative movement (20) with respect to one another, said relative movement having a different camber angle (β) to the movement of the cam follower (6) on the finished guide track (2).

2. Method according to claim 1, **characterized in that** the camber angle (β) of the finish milling cutter (17) varies along the guide track (2).

3. Method according to claim 1, **characterized in that** the camber angle (α) of the rough milling cutter (10) is kept substantially constant along the guide track (2).

4. Method according to claim 1, **characterized in that** the material removal during the rough milling is performed exclusively by circumferential and corner cutting edges (14, 15) of the rough milling cutter (10).

5. Method according to claim 1, **characterized in that**, during the rough milling, the rough milling cutter (10) rotates about an axis of rotation (11) which is at an acute angle to the bottom of the groove (2) opened by the rough milling.

6. Method according to claim 1, **characterized in that**, during the rough milling, the rough milling cutter (10) rotates about an axis of rotation (11) which is at an acute angle to a radial direction running through, on the one hand, the axis (7) of the guide body (1) and, on the other hand, the middle of the front (16) of the milling cutter (10).

7. Method according to claim 1, **characterized in that**, during the rough milling, the rough milling cutter (10) rotates about an axis of rotation (11) which is at an acute angle to a cross-sectional area of the guide body (1).

8. Method according to claim 1, **characterized in that**, during the rough milling, the rough milling cutter (10) rotates about an axis of rotation (11) which lies in a plane defined by the radial of the guide body (1) and a tangent vector (22) pointing in the direction of the groove (2) to be opened.

9. Method according to claim 1, **characterized in that** the distance (A) of the rough milling cutter (10) from the groove flank (3, 4) is the sum of an allowance for the finish milling process and an allowance for the deviation of the rough milling cutter path from the finish milling cutter path.

10. Method according to claim 1, **characterized in that** the axis of rotation (11) of the rough milling cutter (10) has a spatial camber angle (α) during the milling.

11. Method according to claim 1, **characterized in that** the fine machining is restricted to the groove flanks (3, 4).

12. Method according to claim 1, **characterized in that**, during the rough milling, the rough milling cutter (10) machines the groove flanks (3, 4) with an oversize (A) and the groove bottom with an undersize.

## Revendications

1. Procédé de réalisation de glissières de guidage (2) spatiales sur des corps de guidage (1) en vue du mouvement d'un suiveur de came (6) suite à un mouvement relatif du corps de guidage (1):
comprenant un fraisage d'ébauche lors duquel on réalise une rainure dans le corps de guidage (1) au moyen d'une fraise d'ébauche (10), par le fait que lors du mouvement d'avance à exécuter en vue de l'enlèvement de matière, le corps de guidage (1) et la fraise d'ébauche (10) exécutent un mouvement relatif (20) l'un par rapport à l'autre, lors duquel la fraise d'ébauche (10) exécute avec un angle d'attaque (α) donné le mouvement du suiveur de came (6) sur la glissière de guidage (2) finie, et
comprenant un usinage de précision lors duquel la rainure est usinée au moyen d'une fraise de finition (17), par le fait que lors du mouvement d'avance à exécuter en vue de l'enlèvement de matière, le corps de guidage (1) et la fraise de finition (17) exécutent un mouvement relatif (20) l'un par rapport à l'autre, qui présente un angle d'attaque (ß) différent par rapport au mouvement du suiveur de came (6) sur la glissière de guidage (2) finie.

2. Procédé selon la revendication 1, **caractérisé en ce que** l'angle d'attaque (ß) de la fraise de finition (17) varie le long de la glissière de guidage (2).

3. Procédé selon la revendication 1, **caractérisé en ce que** l'angle d'attaque (α) de la fraise d'ébauche (10) est maintenu sensiblement constant le long de la glissière de guidage (2).

4. Procédé selon la revendication 1, **caractérisé en ce que** l'enlèvement de matière lors du fraisage d'ébauche est réalisé exclusivement par des tranchants périphériques et d'angle (14, 15) de la fraise d'ébauche (10).

5. Procédé selon la revendication 1, **caractérisé en ce que** lors du fraisage d'ébauche, la fraise d'ébauche (10) tourne autour d'un axe de rotation (11) qui forme un angle aigu avec le fond de la rainure (2) ouverte par le fraisage d'ébauche.

6. Procédé selon la revendication 1, **caractérisé en ce que** lors du fraisage d'ébauche, la fraise d'ébauche (10) tourne autour d'un axe de rotation (11) qui forme un angle aigu avec une direction radiale qui passe d'une part par l'axe (7) du corps de guidage (1) et d'autre part par le milieu de la face frontale (16) de la fraise (10).

7. Procédé selon la revendication 1, **caractérisé en ce que** lors du fraisage d'ébauche, la fraise d'ébauche (10) tourne autour d'un axe de rotation (11) qui forme un angle aigu avec une surface de section transversale du corps de guidage (1).

8. Procédé selon la revendication 1, **caractérisé en ce que** lors du fraisage d'ébauche, la fraise d'ébauche (10) tourne autour d'un axe de rotation (11) qui se situe dans un plan (23) qui est défini par la radiale du corps de guidage (1) et un vecteur de tangente (22) qui est orienté en direction de la rainure (2) à ouvrir.

9. Procédé selon la revendication 1, **caractérisé en ce que** la distance (A) de la fraise d'ébauche (10) par rapport au flanc de rainure (3, 4) est la somme d'une surmesure pour l'opération de fraisage de finition et d'une surmesure pour l'écart de la trajectoire de fraise d'ébauche par rapport à la trajectoire de fraise de finition..

10. Procédé selon la revendication 1, **caractérisé en ce que** l'axe de rotation (11) de la fraise d'ébauche (10) présente un angle d'attaque spatial (α) pendant le fraisage.

11. Procédé selon la revendication 1, **caractérisé en ce que** l'usinage de précision se limite aux flancs de rainure (3, 4).

12. Procédé selon la revendication 1, **caractérisé en ce que** lors du fraisage d'ébauche, la fraise d'ébauche (10) usine les flancs de rainure (3, 4) avec une cote majorée (A) et le fond de rainure avec une cote minorée.
